# EUROPÄISCHE PATENTSCHRIFT

(11) **EP 3 380 820 B1**
(45) Veröffentlichungstag und Bekanntmachung des Hinweises auf die Patenterteilung: **15.09.2021**
(21) Anmeldenummer: 16802038.6
(22) Anmeldetag: 28.11.2016
(51) Int. Cl.: G01J 5/02, G01J 5/04, G01J 5/10, G01J 5/12

(54) **THERMISCHER INFRAROT-SENSORARRAY IM WAFER-LEVEL-PACKAGE**
THERMAL INFRARED-SENSORARRAY IN WAFER-LEVEL-PACKAGE
CAPTEUR INFRAROUGE THERMIQUE DANS EMBALLAGE DE NIVEAU DE TRANCHE

(30) Priorität: 27.11.2015 DE 102015120685; 30.11.2015 DE 102015120737
(43) Veröffentlichungstag der Anmeldung: 03.10.2018
(73) Patentinhaber: Heimann Sensor GmbH, 01109 Dresden (DE)
(72) Erfinder: HERRMANN, Frank, 01809 Dohna (DE); SCHMIDT, Christian, 01067 Dresden (DE); SCHIEFERDECKER, Jörg, 01157 Dresden (DE); LENEKE, Wilhelm, 65232 Taunusstein (DE); FORG, Bodo, 55131 Mainz (DE); SIMON, Marion, 65307 Bad Schwalbach (DE); SCHNORR, Michael, 65510 Hünstetten-Wallbach (DE)
(74) Vertreter: Lippert Stachow Patentanwälte Rechtsanwälte Partnerschaft mbB
(86) Internationale Anmeldenummer: PCT/EP2016/078943
(87) Internationale Veröffentlichungsnummer: WO 2017/089604

(56) Entgegenhaltungen:
- EP-A1- 2 172 755
- WO-A1-2013/120652
- DE-A1-102008 002 157
- US-A1- 2005 017 175
- US-A1- 2014 061 845
- RONCAGLIA ET AL: "CMOS-compatible fabrication of thermopiles with high sensitivity in the 3-5mum atmospheric window", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, Bd. 125, Nr. 1, 5. Juli 2007 (2007-07-05), Seiten 214-223, XP022143834, ISSN: 0925-4005, DOI: 10.1016/J.SNB.2007.02.018

## Beschreibung

Die Erfindung betrifft einen thermischen Infrarot-Sensorarray im Wafer-Level-Package mit mindestens einem in Siliziummikromechanik hergestellten Infrarot sensitiven Pixel, mit einer wärmeisolierenden Aushöhlung in einem Siliziumsubstrat, die durch einen Siliziumrand umgeben ist, sowie einer dünnen Membran, die mittels dünner Beams mit dem Siliziumrand verbunden ist, wobei sich zwischen der Membran, den Beams und dem Siliziumrand Schlitze befinden.

Infrarot-Thermopile-Sensoren und -Arrays sind hinlänglich in verschiedenen Formen und Bauweisen bekannt. In Siliziummikromechanik auf einem Substrat hergestellte Thermopilesensoren bestehen meist aus einer dünnen Membran, auf der sich in Dünnschichttechnik hergestellte Thermoelemente befinden. Unter der Membran befindet sich eine Aushöhlung im Substrat, die durch einen Siliziumrand (Tragkörper) umgeben ist. Thermoelemente in Form von langgestreckten Thermopileelementen besitzen "heiße" Kontakte an einem Ende und "kalte" Kontakte am anderen Ende, die durch Leitbahnen miteinander verbunden sind, wobei sich die "heißen" Kontakte auf oder im Zentralteil der Membran und die "kalten" Kontakte sich auf dem Siliziumrand befinden, der als Wärmesenke dient.

Zwischen dem Siliziumrand und der Membran befinden sich lange schmale Beams (Stege), die den Zentralteil der Membran (Absorberbereich) mit der Wärmesenke (Siliziumrand des jeweiligen Pixels) verbinden und die ein oder mehrere Thermoelemente beinhalten, wobei sich die Leitbahnen der Thermopileelemente auf den Beams erstrecken. Beiderseits der langen Beams befinden sich Schlitze, welche die Beams vom Zentralteil bzw. dem Siliziumrand eines Pixels, d.h. der Wärmesenke trennen.

Der größte Teil der Absorption von Infrarotstrahlung findet im Zentralbereich der Membran statt. Besonders bei Arrays mit hoher räumlicher Auflösung sind die Pixel klein und die Schlitze sehr schmal. Um den Füllgrad des Sensors zu erhöhen, kann ein Infrarotschirm über der Membran oder dem Pixel gespannt sein, wie aus der WO2013/120652 A1 hervorgeht, um durch die größere Fläche mehr Infrarotstrahlung aufnehmen zu können. Unter Füllgrad ist das Verhältnis von der Größe der absorbierenden Fläche zur Größe des Pixels selbst zu verstehen.

Die Thermoelemente auf den Beams befinden sich relativ nahe an der Wärmesenke (Siliziumrand), so dass ein größerer Teil an Wärme über das sich dazwischen befindliche Gas zur Wärmesenke abfließen kann. Daraus resultiert ein Signalverlust. Um dem entgegen zu wirken, wird gewöhnlich eine Vakuumversiegelung der Thermopile- Infrarot- Array-Sensoren angestrebt.

In der Literatur sind sogenannte verkapselte Thermopilesensoren bekannt, die beispielsweise in Oberflächenmikromechanik hergestellt werden, wie aus Arndt, M. and Sauer, M. "Spectroscopic carbon dioxide sensor for automotive applications", Proc. IEEE Sensors 2004, Vienna, 2004, vol. 1, 252-255 hervorgeht. Dabei werden die Schlitze in der Membran zur Herstellung einer Kavität darunter verwendet. Die Herstellung der Kavität erfolgt durch anisotropes Ätzen durch die Schlitze, wobei ein Schutz der umliegenden Elektronik erforderlich ist, um zu erreichen, dass mit der Ätzflüssigkeit nur das Silizium unterhalb der Membran geätzt wird. Ein weiterer auf diese Anordnung gebondeter Wafer wird zur Erzeugung einer hermetisch versiegelten Verkapselung benötigt. Ohne die Verkapselung würde die Wärme wieder an die Luft und auch an die die Kavität umgebenden seitlichen Siliziumwände abgegeben werden. Durch die Verkapselung kann diese Wärme nicht mehr über das Gas entweichen.

In der US 8 519 336 B2 wird eine Konfiguration vorgeschlagen, bei der sich ein Infrarotempfänger über einer reflektierenden Schicht befindet. Auf einem darunter liegenden Schaltkreis befindet sich eine Auswerteschaltung. Es handelt sich hier um ein System, bei dem drei Siliziumsubstrate (Wafer) zusammengefasst sind. Die erforderliche Empfangseinheit besteht aus einem Thermopile über einer druckreduzierten und versiegelten Grube, die sich in unmittelbarer Nähe zur Empfangseinheit befindet.

Weiterhin befindet sich unterhalb der Empfangseinheit eine reflektierende Schicht aus einem reflektierenden Material, wie z.B. Gold oder Aluminium, so dass Infrarotstrahlung, welche nicht primär in der Empfangseinheit detektiert wurde, reflektiert und wieder zurück auf die Empfangseinheit fokussiert wird, zur erneuten Möglichkeit der Detektion zur Verfügung steht.

Es versteht sich, dass die Detektionseinheit mit der Auswerteschaltung elektrisch verbunden sein muss, was beispielsweise mittels Durchkontaktierungen (Through-Silicon-Vias) gelöst werden kann. Diese Variante erfordert aber eine hohe Genauigkeit bei der Justage, da die Wafer sehr exakt aufeinander ausgerichtet werden müssen, um tatsächlich elektrische Verbindungen herstellen zu können.

In der CN 103148947 A wird eine Wafer-Level Packaging Struktur beschrieben, welche die Ansprechrate (Response Rate) eines Thermopile Detektors erhöht. Dazu befindet sich die Thermopilestruktur auf einem umgedrehten Siliziumwafer, welcher auf einem PCB (Printed Circuit Board: gedruckte Leiterplatte) mittels Flip-Chip-Technologie aufgebracht wird. Die heißen Kontakte der Thermopilestruktur befinden sich auf einer Membran und sind über Thermoelemente mit kalten Kontakten verbunden. Auf dem PCB befindet sich eine IR reflektierende Schicht, um Teile der transmittierten Infrarotstrahlung teilweise wieder zurück auf die Membran zu reflektieren und um diesen Teil der IR-Strahlung erneut detektieren zu können.

Bei dieser Anordnung wird das Silizium des Siliziumwafers selbst als Linse genutzt. Eine solche Konstruktion dürfte hauptsächlich für Temperaturmessungen in relativer Nähe zum Sensor (Thermopilestruktur) geeignet sein, weil entfernte Objekte wegen der kurzen Brennweite der Linse nur schwer detektiert werden können.

Weiterhin wird in der US 2008/0128620 ein System aus drei gebondeten Wafern beschrieben, bei dem sich mehrere Thermopiles auf einem abgedünnten Wafer zwischen den beiden anderen Wafern befinden, und das obere und das untere Wafer jeweils mit einer die Thermopiles umgebenden Grube versehen ist. Bei dieser Anordnung wird in dem unteren Wafer eine Siliziumbasis durch Ätzen einer Grube in den Wafer für das Thermopile geschaffen. Der zweite mittlere Wafer wird soweit abgedünnt, dass nur noch eine dünne Membran übrig bleibt. Das Thermopile mit angeschlossener Elektronik wird auf dieser dünnen Membran aufgebaut. Eine Kappe aus halbleitendem Material - das ist das obere Wafer - wird auf die dünne Membran gebondet, nachdem die Membran auf die Siliziumbasis gebondet worden ist.

Der Nachteil einer solchen Anordnung ist darin zu sehen, dass das Thermopile offenbar nachträglich auf den abgedünnten Wafer aufgebracht wird, was sehr aufwändig ist.

Das Thermopile wird hier auf der Membran ohne Schlitze bzw. offene Kanäle zwischen den zwei Gruben aufgebracht. Weiterhin ist ein Vakuum um das Thermopile herum notwendig, um den Wärmetransport durch ein Gas zu unterbinden. Für die Erzeugung des Vakuums ist außerdem in beiden Gruben ein Gettermaterial notwendig, was sehr teuer ist.

Die Kompatibilität dieses Herstellungsprozesses zum CMOS Prozess ist für die Signalverarbeitung eingeschränkt und erfordert aufwändige Herstellungsverfahren.

Die EP 2 172 755 A1 betrifft einen Infrarotsensor mit einem Bandpassfilter auf der Vorderseite und eine Vakuumkavität. In der Vakuumkavität befindet sich ein Temperatursensor in einem vorgegebenen Abstand oberhalb des Sensors. Dieser stellt zugleich die Oberseite der Kavität dar.

Weiterhin wird in der EP 2 172 755 A1 eine Lösung mit einem Wafer beschrieben, dessen Öffnung mit schrägen Wänden unter dem Sensor durch den kompletten Substratwafer geht. Um diese Öffnung hermetisch zu verschließen, wird eine Art Basiswafer eingesetzt. Diese Lösung der hermetischen Versiegelung durch das Eintreiben bzw. nasschemische Ätzen schräger Gruben ist für Einzelelement-Sensoren ausreichend, aber für Thermopile-Sensorarrays mit vielen Einzelsensoren/Pixeln würde das zu sehr großen Sensor- bzw. Focal-Plane-Array (FPA)-Gebieten führen, was die Kosten des Chips selbst aber auch der zugehörigen Optik stark erhöht. Der nötige Offset zwischen der Maske auf der Rückseite des Wafers und der Membran auf der Vorderseite behindert eine miniaturisierte Anordnung von vielen Pixeln. Kleine Pixel mit d < 400 µm sind damit nicht herstellbar.

Die angestrebte Miniaturisierung würde durch den dann größer werdenden Sensor- bzw. FPA-Bereich nur über eine Verringerung der Pixelzahl und damit einer verschlechterten optischen Abbildung möglich sein.

In der US 7 180 064 B2 wird ein Infrarotsensor-Package genutzt, um die Membran vor äußeren Einflüssen zu schützen. Das Thermopilechip besitzt hier keine Perforationen in der Membran, durch die der Wärmetransport über die Membran von den heißen Kontakten zur Siliziumsenke hin reduziert werden kann. Weiterhin fehlen Hinweise zu einem Vakuumverschluss der Sensoranordnung, was zwar eine Herstellung unter Normalatmosphäre mit deutlich geringerem Aufwand ermöglicht, andererseits aber eine ausreichend hohe Signalauflösung bei kleinen Pixeln verhindert. Die Verbindung zwischen den Siliziumelementen muss nicht zwingend zu einem hermetisch versiegelten Package führen, bzw. wären unabhängig voneinander in der oberen und der untere Grube Gettermittel aufzubringen, was die Kosten erhöhen würde.

Die US 2012/0319303 A1 betrifft eine hermetische Abdichtung für mikromechanische Systeme mit einer Metalllegierung unter Einschluss eines Gases mit einer hohen Dielektrizitätskonstante.

Weiterhin wird in der US 5 323 051 ein Halbleiter-Wafer-Level-Package beschrieben, bei dem auf dem eigentlichen Wafer mit Strukturen ein Verkapselungswafer aufgebracht wird, bevor der Wafer in einzelne Chips zersägt wird.

In der US 2006/0016995 A1 wird ein mikrostrukturierter Infrarotsensor in einem Package mit einer Kappe beschrieben, die als Cap-Chip bezeichnet wird und die eine integrierte Linsenfläche zur Fokussierung enthält. Eine solche Lösung ist allerdings nur für größere Pixel von Einelement-Sensoren geeignet.

Aus der US 2005/0081905 A1 geht ein Thermopile Infrarot Package mit einer Membran über einer Grube hervor, bei dem ebenfalls zur Versiegelung eine Kappe auf das Substrat aufgebracht wird. Ein Versiegeln der Grube unter der Membran ist nicht notwendig, jedoch ist ein Wärmetransport unterhalb der Membran durch ein dort befindliches Gas möglich und der eigentliche Effekt des Versiegelns der Grube oberhalb der Membran geht verloren.

Schließlich wird in der DE 10 2004 020 685 B3 ein Infrarotsensor mit einer Getterschicht beschrieben, bei dem sich direkt unter einem perforierten Membrangebiet eine Grube befindet. Abgedeckt wird diese Anordnung mit einem Deckelwafer.

Weitere Infrarotsensoren sind aus US2014/0061845 A1, DE 10 2008002157 A1, RONCAGLIA ET AL: "CMOS-compatible fabrication of thermopiles with high sensitivity in the 3-5mum atmospheric window", SENSORS AND ACTUATORS B: Bd. 125, Nr. 1, 5. Juli 2007 (2007-07-05), Seiten 214-223, WO 2013/120652 A1 und US 2005/017175 A1 bekannt.

Zusammenfassend kann festgestellt werden, dass in keiner der Druckschriften ein hochauflösenden Infrarot-Sensorarray mit kleinen Pixeln beschrieben wird, das in einem CMOS kompatiblen Prozess herstellbar ist, eine einfache Anbringung reflektierender Schichten auf einer Kavität unter einem Sensorpixel erlaubt und das mit dem Aufbringen eines einzelnen Gettermittels hermetisiert werden kann.

Die Aufgabe der Erfindung besteht deshalb darin, einen hochempfindlichen Thermopile- Infrarot- Array- Sensor in einem Wafer-Level-Package mit kleinen Pixeln mit einer einfachen CMOS-kompatiblen Prozesstechnik für einen Sensorwafer selbst und einem vakuumdichten Verschluss auf Wafer-Level-Niveau anzugeben, mit dem es weiterhin möglich ist, das für den vakuumdichten Verschluss üblicherweise verwendete Gettermittel räumlich getrennt von den Filterschichten eines Deckelwafers aufzubringen.

Die der Erfindung zugrunde liegende Aufgabe wird durch die kennzeichnenden Merkmale des Hauptanspruchs gelöst.

Weitere Ausgestaltungen der Erfindung gehen aus den zugehörigen Unteransprüchen hervor.

Die Empfindlichkeit eines Infrarotsensors ist insbesondere auch abhängig von der Wärmeableitung über das Gas, welches den Infrarotsensor umgibt und kann über eine vakuumdichte Verpackung erhöht werden. In einem vakuumdichten Gehäuse sind Signalverluste durch die Wärmeleitung über das Gas nicht vorhanden. Gebräuchliche Vakuumgehäuse in der Aufbau- und Verbindungstechnik sind allerdings material- und kostenaufwendig, um die nötige Vakuumdichtheit zu erreichen. Schon das normale Chipkleben kann aufgrund von Ausgasungen und Undichtigkeit zum Kosten- und Problemfaktor werden.

Demgegenüber lässt sich ein Verpacken und vakuumdichtes Versiegeln auf Waferlevel kostengünstig und massentauglich realisieren. Durch das Verkapseln des Thermopilesensor-Wafers mit einem Deckel- und einem Unterbodenwafer wird die nötige Vakuumdichtheit erreicht.

Die Erfindung betrifft einen thermischen Infrarot-Sensor-Chip mit mindestens einem kleinen sensitiven Thermopileelement (Pixel), der in Siliziummikromechanik hergestellt wird und bei dem eine wärmeisolierende Grube (Kavität) unter einer dünnen Membran nicht durch Herausätzen einer Opferschicht von der Vorderseite, sondern von der Waferrückseite her, ausgebildet wird.

Dabei wird der Chip mit einem Deckel und einem Unterboden vakuumdicht versiegelt. Der Deckel sollte eine gewisse Mindestdicke aufweisen (z.B. einige Hundert Mikrometer), um zu vermeiden, dass der Deckel sich unter Vakuum durchbiegt. Andererseits darf der Deckel aber auch nicht zu dick sein, um die Absorption von IR Strahlung im Deckel gering zu halten.

Die Membran hat mindestens eine Öffnung (z.B. einen Schlitz), die den Gasaustausch von der Ober- zur Unterseite erlaubt. Auf einer der beiden Seiten (Deckelwafer oder Bodenverschluss) oder auf beiden wird vorzugsweise ein Gettermittel eingebracht, um eine langzeitstabile Hermetizität (z.B. Vakuum) zu sichern. Besonders vorteilhaft ist es, wenn sich das Gettermittel nur auf dem Bodenverschluss befindet, während der Deckelwafer optische Antireflexschichten aufweist. Das gleichzeitige Aufbringen von Antireflexionsschichten und Gettermittel auf dem Deckelwafer bringt häufig technologische Probleme mit sich.

Das thermisch sensitive Einzelpixel enthält bevorzugt eine Thermopilestruktur, aber auch andere thermische Infrarot-Sensortypen wie beispielsweise pyroelektrische Sensoren oder Bolometer sind möglich.

Die Größe des oder der Pixel ist kleiner als 400 µm, bevorzugt kleiner als 100 µm.

Das beispielhaft beschriebene Thermopilepixel besteht aus einem Siliziumchip, welcher aus einem Wafer hergestellt wird. Spezielle CMOS- kompatible Verfahren der Mikrosystemtechnik führen nach dem eigentlichen CMOS-Prozess zur Herstellung der Sensorelemente (Pixel), die sich beispielsweise auf einer dünnen dielektrischen Schicht, wie Siliziumdioxid, Siliziumnitrid, -karbid oder deren Kombination davon, befinden. Mittels Durchtreiben einer Grube durch den Wafer von der Rückseite entstehen auf der Vorderseite dünne Membranen aus den genannten dielektrischen Schichten. Auf den Membranen befinden sich heiße Kontakte sowie die thermoelektrischen Elemente. Zwischen dem Gebiet der heißen Kontakte im Zentralteil der Membran und der Siliziumsenke - das ist der die Grube umgebende Rand - befinden sich Thermoelemente auf Beams, welche durch Schlitze in der Membran vom Zentralteil der Membran und der Siliziumsenke thermisch isoliert sind und so einen Wärmetransport von den heißen Kontakten zur Siliziumsenke hin verringern.

Um die Herstellungskosten gering halten zu können, wird das Wafer- Level- Packaging als effiziente und kostensparende Alternative verwendet. Hierbei wird der Thermopile-Sensor im Waferverbund zwischen einem Deckel- und Unterbodenwafer vakuumdicht verschlossen. Der Deckel ist mit einer Verwölbung (Kavität) nahe dem Pixel versehen, wobei sich vorzugsweise auf beiden Seiten des Deckels eine für Infrarot durchlässige Antireflexionsschicht befindet, um die Infrarotstrahlung mit maximaler Transmission auf das Sensorelement zu lenken. Die Antireflexionsschicht auf einer oder beiden Seiten des Deckelwafers kann auch Filtereigenschaften aufweisen, um z.B. bestimmte Wellenlängenbereiche zu blockieren (sogenannte Langpass- oder Bandpassfilter).

Die einzelnen Pixel bestehen aus Membranen, die jeweils perforiert sind, damit durch die Schlitze ein Gasaustausch stattfinden kann. Unter den einzelnen Pixeln befindet sich eine Grube, welche auf der Rückseite eingetrieben durch den Wafer hindurch verläuft. Die dadurch entstehende Membran ist dann von der Siliziumsenke getrennt und ist lediglich über dünne Stege (Beams) mit dieser verbunden. Diese Grube besitzt idealerweise senkrechte Wände, um eine hohe Pixeldichte zu erreichen. Sie kann durch das Siliziumtiefenätzen (sogenannter DRIE Prozess) von der Rückseite hergestellt werden. Dies ist eine einfache und CMOS- kompatible Variante, bei der die Vorderseite mit den aktiven Gebieten weitestgehend geschützt ist. Dadurch ist kein aufwendiger Schutz der Vorderseite nötig. Die senkrechten Wände bieten eine längere Weglänge zur Wärmesenke auch bei Füllungen mit Gasen geringer Wärmeleitfähigkeit, wie Kr, Ar.

Natürlich sind auch andere Herstellungsarten möglich, um diese Grube herzustellen.

Auf den Membranen befindet sich eine Schicht aus mehreren dielektrischen Schichten und integrierten Doppel-Polysilizium- Thermoelementen.

In einer weiteren Ausführungsform befinden sich auf dem Membranstapel Thermoelemente aus Materialien mit einem hohen Seebeck- Koeffizienten. Sowohl amorphe Siliziumschichten, Silizium-Germanium - Schichten, als auch speziell implantierte Schichten, sind möglich.

Der Deckel kann aus Silizium bestehen, auch andere Materialien wie Glassubstrate oder andere organische und anorganische Materialien mit ausreichend Transparenz im Infrarotbereich sind möglich um den Anforderungen an die nötigen optischen Eigenschaften zu genügen.

Die auf dem Deckel befindliche Infrarotbeschichtung (Infrarot Coating) kann aus verschiedenen Materialien und auch aus einem Materialverbund bestehen, welcher den Anforderungen des zu detektierenden Infrarotbereiches entspricht.

Der Bodenwafer kann aus Silizium oder anderen Materialien, wie Glas, bestehen. Auf dem Bodenwafer befindet sich in Richtung zum Sensor hin idealerweise eine reflektierende Schicht, die zum Reflektieren der durchgelassenen Infrarotstrahlung zurück zum Zentralteil der Membran hin dient. Diese Schicht kann relativ einfach vor dem Zusammenbringen mit dem Sensorwafer auf dem unteren Bodenwafer aufgebracht werden.

Metalle wie Aluminium, Gold, Silber, Titannitrid und andere Materialien sind möglich. Die Metallschicht kann ganzflächig oder auch strukturiert (nur direkt unter den Membranen) vorgesehen sein.

Vor dem Verschluss des Sensorchips mit dem Deckelwafer und dem Bodenwafer wird vorzugsweise auf einer Seite (z.B. dem Bodenwafer) ein Gettermittel eingebracht, das Dank der Schlitze auch an die Kavität unter dem Deckelwafer gelangen kann und für dauerhafte Hermetizität sorgt. Diese Herstellung ist einfach und CMOS-unkritisch. Weiterhin hat das Gettermittel dadurch keinen Kontakt mit den Filterschichten.

Nachfolgend wird die Erfindung an Hand von Ausführungsbeispielen näher beschrieben. In den zugehörigen Zeichnungen zeigen:
- Fig. 1:: eine Schnittdarstellung eines Grundaufbaus eines erfindungsgemäßen verkapselten Thermopile Sensorarrays mit drei Einzelpixeln;
- Fig. 2:: eine Schnittdarstellung einer Aufbauvariante eines Einzelsensors;
- Fig. 3:: eine Draufsicht auf einen Ausschnitt eines erfindungsgemäßen Pixels mit übereinander liegenden Polysilizium-Leitbahnen, die durch Perforationsschlitze voneinander getrennt sind;
- Fig. 4:: eine Aufbauvariante eines erfindungsgemäßen Infrarot-Thermopilesensors mit vier Pixeln und jeweils einem Strahlungskollektor auf dem Zentralteil der Membranen;
- Fig. 5:: eine Ansicht eines erfindungsgemäßen Infrarot-Thermopilesensors in einem Wafer-Level-Package;
- Fig. 6:: eine Aufbauvariante eines erfindungsgemäßen Infrarot-Thermopilesensors mit einem Gettermittel auf dem Bodenverschluss;
- Fig. 7:: einen vakuumdichten Verschluss eines erfindungsgemäßen Infrarot-Thermopile-Sensorwafers mit Deckel und Bodenverschluss; und
- Fig. 8:: einen vakuumdichten Verschluss eines erfindungsgemäßen Infrarot-Thermopile-Sensorwafers mit einem Deckel und einer Kavität im Bodenverschluss.

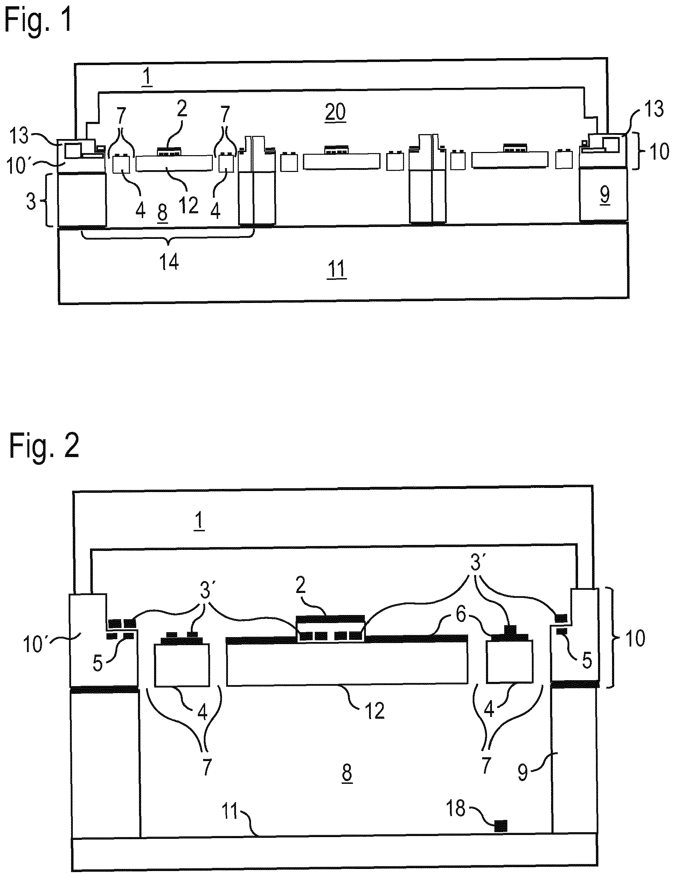

Fig. 1 zeigt den prinzipiellen Aufbau eines erfindungsgemäßen Wafer-Level-Packages (WLP) mit einem Deckelwafer 1, sowie mit hermetisch versiegelten Thermopile Sensorarrays mit drei Einzelpixeln 14 in einer Zeile zum Empfang von Infrarotstrahlung von einem Messobjekt, bestehend aus einen CMOS-Stapel 10 mit einer unteren isolierenden Schicht auf einem Siliziumsubstrat 3, der auf einem Bodenwafer 11 angeordnet ist. Jeder Einzelpixel 14 besteht aus einer Membran 12 über einer Grube 8 im Siliziumsubstrat 3 mit "heißen" Kontakten 2, einer Infrarot Thermopile Struktur und Beams 4, welche die Membran 12 mit einem Rand 13 auf einer Siliziumsenke 9 verbinden. Die Membran 12 besteht aus einer unteren isolierenden Schicht 10', wie Siliziumdioxid, Siliziumnitrid, -karbid oder deren Kombination und dem darüber befindlichen CMOS-Stapel 10.

Die für Infrarot sensitiven Einzelpixel 14 können auch als Bolometer oder pyroelektrische Sensoren ausgebildet sein.

Der Deckelwafer 1 ist kappenartig mit einer Kavität 20 auf der Innenseite über dem CMOS-Stapel 10 ausgebildet, welche die drei Einzelpixel 14 einschließt.

Die zur Thermopile Struktur gehörenden "kalten" Kontakte (nicht dargestellt) befinden sich ebenfalls auf der Siliziumsenke 9. Auf dem Rand 13 kann eine Auswerteelektronik 13' angeordnet sein. Die Membran 12 und die Beams 4 sind durch Schlitze 7 vom Rand 13 bzw. der Siliziumsenke 9 getrennt. Unter der Membran 12 befindet sich eine Grube 8 mit senkrechten, oder nahezu senkrechten Wänden, die sich durch das gesamte Siliziumsubstrat 3 erstreckt. Durch die senkrechten Wände der Grube 8 ist eine größere Weglänge für die beim ersten Auftreffen durch die Membran 12 transmittierte Infrarotstrahlung möglich, als bei einer Version mit schrägen Wänden.

Der Deckelwafer 1 und der Bodenwafer 11 kann jeweils aus Silizium bestehen, wobei auch andere Materialien, wie Glas oder kohlenstoffhaltige Substrate, wie polymere Materialien, möglich sind. Der Boden 11 kann auch aus einem metallischen Werkstoff bestehen, um Infrarotstrahlung, welche durch Schlitze 7 im CMOS-Stapel 10 gelangt, zurück zum Zentralteil der Membran 12 zu reflektieren.

Auf dem Zentralteil der Membran 12 und auf den Beams 4 befindet sich eine absorbierende Schicht 6, welche Infrarotstrahlung von einem Messobjekt in einem vorgegebenen Wellenlängenbereich absorbiert.

Zur Herstellung einer hermetischen Versiegelung ist das Zusammenbringen von einem Deckelwafer 1 und einem Bodenwafer 11, mit dem Sensorwafer, bestehend aus Siliziumsenke 9 und CMOS-Struktur 10, dazwischen möglich. Der Bodenwafer 11 hat die Funktion, die Grube 8 unter der Membran 12 hermetisch abzuschließen.

Die hermetische Versiegelung kann auch unter Zuhilfenahme der Pick-and-Place- Technik, bekannt aus der Aufbau- und Verbindungstechnik, durch das Aufbringen von kleinen Kappen auf der Vorder- und Rückseite auf Chiplevel entstehen.

Der Bodenwafer 11 ist notwendig, um die Grube 8 oder die Gruben 8 bei mehreren Einzelpixeln 14, z.B. in einer Zeile bzw. einer Matrixstruktur aus Einzelpixeln 14, zu verschließen. Durch die Schlitze 7 in der Membran 12 würden sonst Moleküle aus dem Raum unter der Membran 12 in den evakuierten Raum über der Membran 12 gelangen und die hermetische Versiegelung wäre unwirksam.

Das Thermopile Sensorarray ist mit einem Gas oder Gasgemisch gefüllt, das eine Wärmeleitfähigkeit hat, die geringer ist als die von Luft oder Stickstoff, um die Konvektion von sensitiven Elementen auf dem Zentralteil der Membran 12 und den Beams 4 zur Siliziumsenke 9, oder dem Gehäuse, bestehend aus Deckelwafer 1 und Bodenwafer 11, die als Wärmesenke fungieren, so gering wie möglich zu halten.

Um diese geringe Wärmeleitung des im Gehäuse eingeschlossenen Mediums zu erreichen, wird idealerweise ein Gas mit einem gegenüber normalem Luftdruck stark reduzierten Innendruck eingesetzt (z.B. ein Gas-Vakuum).

Für die Sicherstellung des Vakuums wird die Verwendung von Gettermitteln bevorzugt, um störende gasförmige Elemente, die sich durch dessen Herstellung im Package befinden, zu gettern, d.h. zu binden. Aufgrund der Perforation der Membran 12 durch die Schlitze 7 ist vorteilhaft nur ein Gettermittel nötig, was sich irgendwo im Package befinden kann. Dadurch sinken die Kosten gegenüber der Version ohne Schlitze 7 in der Membran 12.

Fig. 2 zeigt eine Aufbauvariante eines Einzelelementsensors im Waferverbund, der grundsätzlich einem Einzelpixel 14 nach Fig. 1 entspricht, bei dem jeweils ein Deckelwafer 1 über und ein Bodenwafer 11 unter dem Thermopilesensor bzw. dem Siliziumsubstrat 3 mit den Thermoelementen 3' angeordnet ist, um eine hermetische Versiegelung sämtlicher Hohlräume dazwischen zu erzeugen. Der Deckelwafer 1 (Kappe) kann beispielsweise auch in einem Verfahren der Aufbau- und Verbindungstechnik, dem Pick-and-Place-Verfahren, auf einen Wafer aufgebracht werden.

Auf dem Zentralteil der Membran 12 und den Beams 4 befinden sich eines oder mehrere Thermoelemente. Diese Thermoelemente können in einem CMOS-Prozess hergestellt werden, wobei auch ein nachträgliches Aufbringen möglich ist. Das kann dann der Fall sein, wenn die thermoelektrischen Materialien im CMOS-Prozess nicht zur Verfügung stehen.

Auf der Oberseite des Bodenwafers 11, also auf der dem Sensor zugewandten Seite, befindet sich bevorzugt eine reflektierende Schicht 17, oder der Boden ist selbst reflektierend. Weiterhin befindet sich hier ein Gettermittel 18 zur Aufrechterhaltung eines langzeitstabilen Vakuums. Nach der Fertigstellung der Einzelelementsensoren wird der Wafer mit üblichen Trennmitteln vereinzelt.

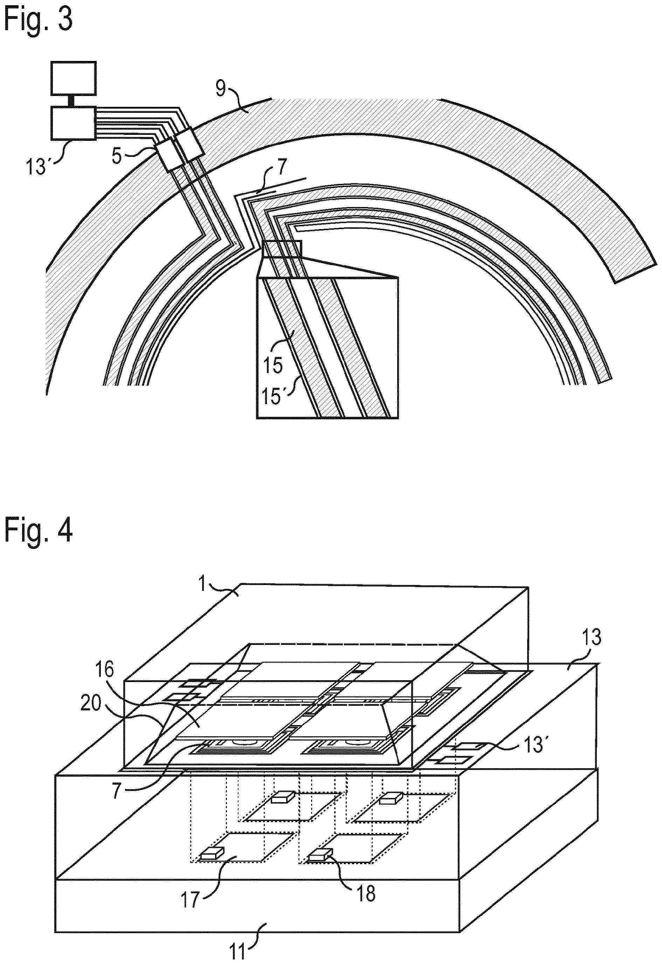

Fig. 3 zeigt eine Ausschnittdarstellung eines erfindungsgemäßen Pixels mit Schlitzen 7, mit kalten Kontakten 5, welche sich auf der Siliziumsenke 9 befinden. In den Schlitzen 7 befindet sich ein Gas-Vakuum, um einen Wärmetransport zwischen den Polysiliziumleitbahnen 15, 15' (oberes und unteres Thermoelement) zu unterbinden. Die Polysiliziumleitbahnen 15, 15' befinden sich übereinander liegend auf der Membran 12. Auf der unteren Polysiliziumleitbahn 15 mit speziellem Seebeck-Koeffizienten befindet sich eine entgegengesetzt dotierte Polysiliziumleitbahn 15' mit einem entgegengesetzten Seebeck-Koeffizienten.

Als Materialien hierfür kommen Polysilizium, oder auch amorphe Siliziumschichten und prinzipiell die Materialien in Betracht, die ein hohes thermoelektrisches Figure-of-Merit (thermoelektrische Gütezahl) besitzen, mit einer n-leitenden Schicht und der anderen p-leitenden Schicht, um eine maximale Signalspannung pro erzeugter Temperaturdifferenz im Pixel 14 zu erreichen. Pro Pixel 14 kann ein Thermoelement aber auch eine größere Zahl von in Reihe geschalteten Thermoelementen enthalten.

Um die Pixel 14 herum bzw. außerhalb der kalten Kontakte 5 kann ein Teil der Auswerteelektronik 13' für die Pixel 14 angeordnet werden.

Fig. 4 zeigt eine Aufbauvariante eines erfindungsgemäßen Thermopilesensors mit vier Pixeln 14 und Strahlungskollektoren 16 jeweils auf dem Zentralteil der Membran 12 zur Erhöhung des Füllfaktors. Die Strahlungskollektoren 16 befinden sich in der Kavität 20 des Deckelwafers 1. Weil der Abstand des Strahlungskollektors 16 zur Wärmesenke 9 oder dem Deckel 1 sehr gering sein kann, wirkt sich der vakuumdichte Verschluss des Sensorchips besonders vorteilhaft aus. Zwischen den Pixeln befinden sich Metallleitungen sowie Auswerteelektronik (Stromversorgung, Schalter, Vorverstärker, Analog-Digitalwandler, oder Teile davon) .

Der Strahlungskollektor 16 ist idealerweise aus einer oder mehreren Schichten hergestellt, um einen möglichst hohen Absorptionsgrad für die ankommende IR-Strahlung zu erreichen. Die heißen Kontakte 2 sitzen im Zentralteil der Membran 12, oder unmittelbar im Stempel, der den Strahlungskollektor 16 trägt und diesen mit der Membran 12 verbindet. Damit kann der Wärmefluss vom Strahlungskollektor 16 zum Zentralteil der Membran 12 ohne Umwege direkt detektiert werden.

Die sich unter dem Zentralteil der Membran 12 befindliche Grube 8 im Siliziumsubstrat 3 wird durch Ätzen oder andere Verfahren von der Rückseite hergestellt, derart, dass das Siliziumsubstrat 3 vollkommen bis zur Membran 12, d.h. bis zur dielektrischen Schicht unter dem CMOS-Stapel 10, durchgeätzt ist. Idealerweise wird dafür der Prozess des Siliziumtiefenätzens (Deep RIE, DRIE) eingesetzt.

Weiterhin befinden sich in der Grube 8 ein Gettermittel 18 und eine reflektierende Schicht 17, die auf dem Bodenverschluss 11 auf der dem Sensor zugewandten Seite angeordnet ist.

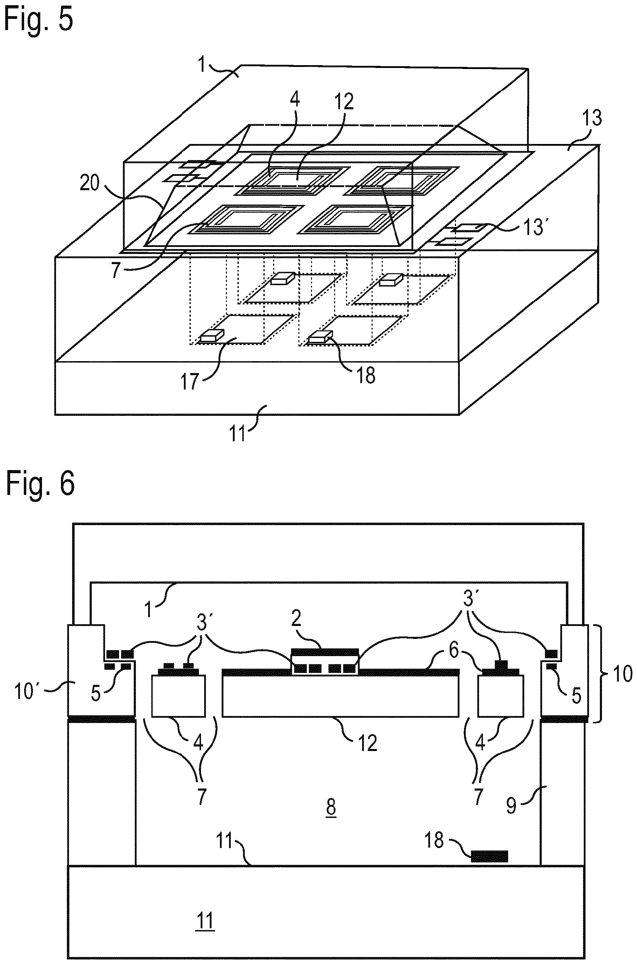

Fig. 5 zeigt eine Draufsicht auf einen erfindungsgemäßen Thermopilesensor in einem Wafer-Level-Package.

In Fig. 6 ist eine Aufbauvariante eines erfindungsgemäßen Thermopilesensors mit einem Gettermittel 18 auf dem Bodenverschluss 11 dargestellt.

Die einzelnen Pixel 14 bestehen aus Membranen 12, die jeweils perforiert sind, damit durch die Schlitze 7 ein Gasaustausch stattfinden kann. Unter den einzelnen Pixeln 14 befindet sich jeweils eine Grube 8, welche von der Rückseite aus durch Siliziumtiefenätzen (DRIE Prozess) eingetrieben, durch den Wafer (Siliziumsubstrat 3) hindurch verläuft. Die dadurch entstehende Membran 12 ist dann von der Siliziumsenke 9 getrennt. Die Grube 8 besitzt idealerweise senkrechte Wände um eine hohe Pixeldichte zu erreichen.

Vorzugsweise wird auf dem Bodenwafer 11 auch ein an sich bekanntes Gettermittel 18 aufgebracht, welches die Stabilität des Vakuums nach dem Verschluss über einen langen Zeitraum sichert. Die eintreffende Infrarotstrahlung wird dadurch nicht gestört, da das Gettermittel 18 sich unterhalb des Pixels befindet. Durch die perforierte Membran 12 ist ein Gasaustausch bzw. Vakuum auch im oberen Deckel 1 gewährleistet. In Abhängigkeit von der Größe und Art des Gettermittels kann sich dieses prinzipiell irgendwo im gehäusten Bereich befinden, z.B. auch unter dem oberen Deckel 1, oder neben dem Sensorbereich.

Der Verschluss des Deckelwafers 1 und des Bodenwafers 11 mit dem eigentlichen Sensorwafer, der die Pixel trägt, kann durch verschiedene, an sich bekannte Verfahren erfolgen. Dazu gehört das anodische Bonden, das Glasfrittebonden, oder Verfahren wie Löten oder Schweißen.

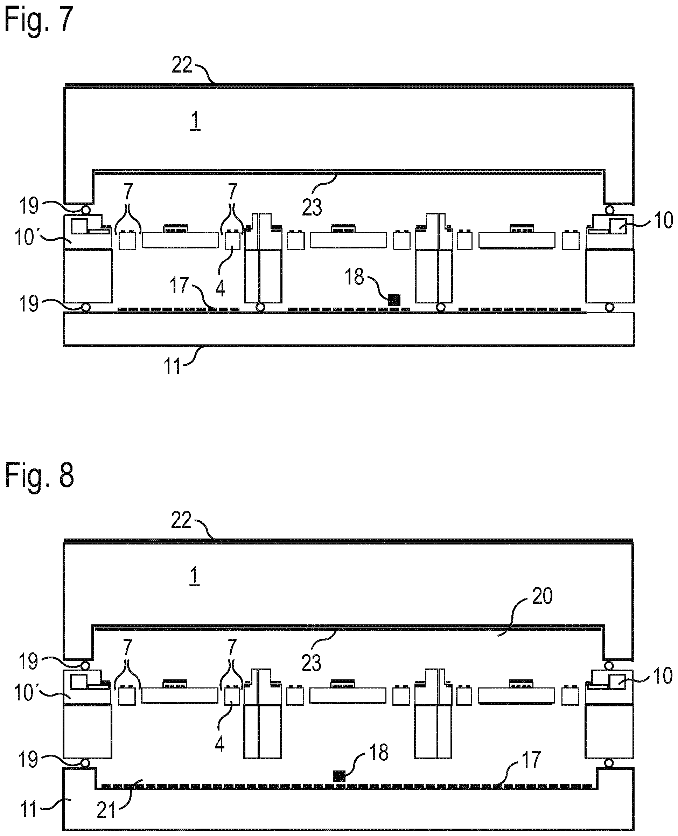

In Fig. 7 ist eine Variante des Waferbondens schematisch dargestellt. Die drei Wafer (Deckelwafer 1, Bodenwafer 11 und Sensorwafer), bestehend aus dem Siliziumsubstrat 3 mit den Siliziumsenken 9, den Membranen 12 und dem jeweiligen CMOS-Stapel 10, dazwischen, werden mittels eines geeigneten Bondmaterials 19, welches auf den Wafern aufgebracht wird, mit einem Waferbonder zusammengebracht. Glasfritte, Lote und andere schweißbare Materialien sind mögliche Bondmaterialien. Auch ein direktes (anodisches) Bonden ist möglich, so dass das Bondmaterial 19 in diesem Fall entfallen kann.

Auf dem Bodenwafer 11 werden auf der Innenseite reflektierende Metallschichten 17 aufgebracht, was z.B. durch Bedampfung, Chemical Vapor Deposition (CVD: Chemische Dampfphasen-Abscheidung) oder Sputtern erfolgen kann. Diese Metallschichten können sowohl ganzflächig als auch strukturiert pro Pixel 14 ausgeführt sein. Auf der Oberseite bzw. Unterseite des Deckelwafers 1 befindet sich weiterhin eine optische Filterschicht 22 bzw. 23. Diese Filterschichten 22, 23 dienen zur Verbesserung der optischen Transmission des Deckelwafers 1. Diese Filterschichten 22, 23 können sowohl Antireflexionsschichten sein, oder einen Langpass- oder Bandpasscharakter aufweisen und bestimmte Spektralanteile der Infrarotstrahlung blockieren.

Grundsätzlich können das Gettermittel 18, die Reflexionsschicht 17 und die Filterschichten 22 und 23 auch bei den anderen erfindungsgemäßen Lösungen gemäß Fig. 1 - 6 angewendet werden.

In bestimmten Fällen (z.B. bei Pixel 14 mit einem sehr geringen Mittenabstand und sehr dünnen Wänden zum Nachbarpixel) kann es allerdings von Vorteil sein, wenn auf dem Bodenwafer 11 eine nicht reflektierende Schicht aufgebracht ist, die Streustrahlungen, die Z.B. durch die Schlitze 7 eindringen, nicht am Boden reflektiert werden und auf dem Rückweg durch die dünne Siliziumwand zum Nachbarpixel gelangen und dadurch die Bildschärfe verschlechtern.

Weiterhin besteht die Möglichkeit für einen Einelementsensor oder ein Array mit kleiner Pixelzahl, in dem Bodenwafer 11 zum Sensor hin eine Kavität 21 einzubringen, die mindestens so groß ist, wie die Gruben 8 eines einzelnen Pixels 14, in der sich jeweils eine reflektierende Schicht 17 und Gettermittel 18 befinden. Der Vorteil ist, dass sich nicht unter jedem Pixel 14 ein Gettermaterial 18 befinden muss.

Die Kavität 21 im Bodenwafer 11 kann auch so groß ausgeführt sein, dass der gesamte Pixelbereich, das gesamte Array, unterhöhlt ist. Der Bodenwafer 11 mit der Kavität 21 kann in diesem Fall dem Deckelwafer 1 mit der Kavität 20 entsprechen, wäre nur eben spiegelbildlich zu montieren. Damit können für den Deckelwafer 1 und den Bodenwafer 11 gleiche Bauteile hergestellt und eingesetzt werden (Fig. 8). Die reflektierende Schicht 17 kann sich über die gesamte Kavität 21 erstrecken.

Entscheidend ist, dass das eingebrachte Gettermaterial 18 eine ausreichend hohe Hermetizität erzeugen kann. Diese Variante ist allerdings für ein hochauflösendes Array mit Pixeln > 500 ungünstig, da entstehende Wärme an den kalten Kontakten bzw. in den Elektroniken über die Siliziumsenken 9 zwischen den Pixeln schlecht an die Umgebung abgeführt werden kann und dadurch die Empfindlichkeit negativ beeinflusst werden kann.

In einem nicht unter die Ansprüche fallenden Vergleichsbeispiel ist auch die folgende, nicht in Figuren dargestellte Variante möglich:

Vereinzelte Kappen werden anstelle des Deckelwafers 1 einzeln auf die Sensorbereiche eines jeden Chips aufgebracht. Idealerweise wird dafür das Pick-and-Place-Verfahren eingesetzt, da es kostengünstig ist. Vorteil wäre, dass die sonst erforderliche hochgenaue Justage eines Deckelwafers 1 entfallen würde.

### Bezugszeichenliste

- 1: Deckel(-wafer)
- 2: Heißer Kontakt
- 3: Siliziumsubstrat
- 4: Beam
- 5: kalter Kontakt
- 6: absorbierende Schicht
- 7: Schlitz
- 8: Grube
- 9: Siliziumsenke/ Wärmesenke
- 10: CMOS-Stapel
- 10': isolierende Schicht
- 11: Boden(-wafer)
- 12: Membran
- 13: Rand
- 13': Auswerteelektronik
- 14: Einzelpixel
- 15: Polyleitbahn
- 15': Polyleitbahn
- 16: Strahlungskollektor
- 17: reflektierende Schicht
- 18: Gettermittel
- 19: Bondmaterial
- 20: Kavität im Deckelwafer
- 21: Kavität im Bodenwafer
- 22: Filterschicht
- 23: Filterschicht

## Patentansprüche

1. Thermischer Infrarot-Sensorarray
im Wafer-Level-Package mit mindestens einem in Siliziummikromechanik hergestellten Infrarot sensitiven Pixel (14),
mit einer wärmeisolierenden Grube (8) in einem Siliziumsubstrat (3), die durch einen Siliziumrand (13) als Wärmesenke (9) umgeben ist,
sowie einer dünnen Membran (12) über der Grube (8), die mittels dünner Beams (4) mit dem Siliziumrand (13) verbunden ist, sowie einer Thermopile Struktur,
wobei sich die Grube (8) durch das Siliziumsubstrat bis zur Membran (12) erstreckt, und
wobei sich zwischen der Membran (12), den Beams (4) und dem Siliziumrand (13) Schlitze (7) befinden, **dadurch gekennzeichnet,**
**dass** eine Mehrzahl von Infrarot sensitiven Einzelpixeln (14) in Zeilen- oder Arrayform angeordnet und in einem CMOS-Stapel (10) auf einer dielektrischen Schicht (10'), die Membran (12) bildend mit jeweils dünnen senkrechten oder nahezu senkrechten Wänden zum benachbarten Einzelpixel (14), ausgebildet sind,
die zwischen mindestens einem kappenartig ausgebildeten, eine Kavität (20) aufweisenden Deckelwafer (1), der die Mehrzahl von Infrarot sensitiven Einzelpixeln (14) überdeckt und einem Bodenwafer (11) angeordnet sind,
wobei der Deckelwafer (1), das Siliziumsubstrat (3) und der Bodenwafer (11) vakuumdicht, ein Gas-Vakuum einschließend, miteinander verbunden sind.

2. Thermischer Infrarot-Sensorarray nach Anspruch 1, **dadurch gekennzeichnet, dass** der Deckelwafer (1) aus einem Infrarot durchlässigen Material, wie Silizium Germanium, Zinksulfid, Chalkogenid, Bariumfluorid oder einem Polymer, besteht.

3. Thermischer Infrarot-Sensorarray nach Anspruch 1, **dadurch gekennzeichnet, dass** der Bodenwafer (11) aus Silizium oder einem anderen thermisch angepassten Material, wie Glas, oder einem metallischen Material bestehen.

4. Thermischer Infrarot-Sensorarray nach Anspruch 3, **dadurch gekennzeichnet, dass** sich auf dem Bodenwafer (11) eine ganzflächige oder strukturierte reflektierende Schicht (17) aus einem Material wie Aluminium, Gold, Silber, oder Titannitrid befindet.

5. Thermischer Infrarot-Sensorarray nach Anspruch 1, **dadurch gekennzeichnet, dass** sich auf dem Zentralteil der Membran (12) und auf den Beams (4) eine absorbierende Schicht 6, welche Infrarotstrahlung in einem vorgegebenen Wellenlängenbereich absorbiert, befindet.

6. Thermischer Infrarot-Sensorarray nach Anspruch 1 und 2, **dadurch gekennzeichnet, dass** der Deckelwafer (1) auf der einem Messobjekt zugewandten Außenseite sowie auf der Innenseite mit der Kavität (20) mit einer Infrarot durchlässigen Antireflexionsschicht oder einer Filterschicht versehen ist.

7. Thermischer Infrarot-Sensorarray nach Anspruch 6, **dadurch gekennzeichnet, dass** die Infrarot durchlässige Antireflexionsschicht mit einer Langpass- oder Bandpassbeschichtung versehen ist.

8. Thermischer Infrarot-Sensorarray nach einem der Ansprüche 1 bis 7, **dadurch gekennzeichnet, dass** mindestens auf dem Deckelwafer (1) oder auf dem Bodenwafer (11) ein Gettermittel (18) aufgebracht ist.

9. Thermischer Infrarot-Sensorarray nach einem der Ansprüche 1 bis 7, **dadurch gekennzeichnet, dass** ein Gettermittel (18) in der Grube (8) oder in den Gruben (8) unter der Membran (12) oder mindestens in der Kavität (20) im Deckelwafer (1), oder in einer Kavität (21) im Bodenwafer (11) angeordnet ist.

10. Thermischer Infrarot-Sensorarray nach einem der Ansprüche 1 bis 7, **dadurch gekennzeichnet, dass** der Bodenwafer (11) großflächig mit einer absorbierenden Schicht beschichtet ist.

11. Thermischer Infrarot-Sensorarray nach Anspruch 1, **dadurch gekennzeichnet, dass** die Infrarot sensitiven Einzelpixel (14) als Thermopile, Bolometer oder pyroelektrischer Sensor ausgebildet sind.

12. Thermischer Infrarot-Sensorarray nach Anspruch 11, **dadurch gekennzeichnet, dass** das Einzelpixel (14) als Thermopile mit Thermoelementen aus zwei übereinander liegenden, aber gegensätzlich dotierten halbleitenden Materialien, wie Polysilizium, amorphen Siliziumschichten, SiGe, oder anderen thermoelektrischen Materialien, besteht.

13. Thermischer Infrarot-Sensorarray nach einem der Ansprüche 1 bis 12, **dadurch gekennzeichnet, dass** jeder Einzelpixel (14) einen Strahlungskollektor (16) aufweist, der über einen Stempel mit dem Zentralteil der jeweiligen Membran (12) verbunden ist und der sich in der Kavität (20) des Deckelwafers (1) befindet.

14. Thermischer Infrarot-Sensorarray nach Anspruch 1, **dadurch gekennzeichnet, dass** der Deckelwafer (1), das Siliziumsubstrat (3) und der Bodenwafer (11) durch anodisches Bonden, eutektisches Bonden, Schweißbonden, Glasfrittebonden, oder andere Waferbondverfahren miteinander verbunden sind.

15. Thermischer Infrarot-Sensorarray nach einem der Ansprüche 1 bis 14, **dadurch gekennzeichnet, dass** im Bodenwafer (11) zum Einzelpixel (14) hin eine Kavität (21) eingebracht ist, die mindestens so groß ist wie die Grube (8) eines Einzelpixels (14), oder sich über den gesamten Bereich der Einzelpixel (14) erstreckt.

## Claims

1. Thermal infrared sensor array
in the wafer-level package with at least one infrared-sensitive pixel (14) produced using silicon micromachining,
with a heat-insulating pit (8) in a silicon substrate (3), which is surrounded by a silicon edge (13) as a heatsink (9),
and a thin membrane (12) over the pit (8), which is connected to the silicon edge (13) by means of thin beams (4), and a thermopile structure,
wherein the pit (8) extends through the silicon substrate up to the membrane (12), and
wherein slots (7) are located between the membrane (12), the beams (4) and the silicon edge (13), **characterized**
**in that** a plurality of infrared-sensitive individual pixels (14) are arranged in linear or array form and are embodied in a CMOS stack (10) on a dielectric layer (10'), forming the membrane (12) with respectively thin perpendicular or nearly perpendicular walls to the adjacent individual pixel (14),
which are arranged between at least one cap-type cover wafer (1) having a cavity (20), which cover wafer (1) covers the plurality of infrared-sensitive individual pixels (14), and a base wafer (11),
wherein the cover wafer (1), the silicon substrate (3) and the base wafer (11) are connected to one another in a vacuum-tight manner enclosing a gas vacuum.

2. Thermal infrared sensor array according to Claim 1, **characterized in that** the cover wafer (1) consists of an infrared-transmissive material, such as silicon-germanium, zinc sulfide, chalcogenide, barium fluoride or a polymer.

3. Thermal infrared sensor array according to Claim 1, **characterized in that** the base wafer (11) consists of silicon or another thermally adapted material, such as glass, or a metallic material.

4. Thermal infrared sensor array according to Claim 3, **characterized in that** a full-area or structured reflective layer (17), made of a material such as aluminium, gold, silver or titanium nitride, is located on the base wafer (11).

5. Thermal infrared sensor array according to Claim 1, **characterized in that** an absorbing layer (6), which absorbs infrared radiation in a specified wavelength range, is located on the central part of the membrane (12) and on the beams (4).

6. Thermal infrared sensor array according to Claim 1 and 2, **characterized in that** the cover wafer (1) is provided with an infrared-transmissive antireflective layer or a filter layer on the outer side facing a measurement object and on the inner side having the cavity (20).

7. Thermal infrared sensor array according to Claim 6, **characterized in that** the infrared-transmissive antireflective layer is provided with a longpass or bandpass coating.

8. Thermal infrared sensor array according to one of Claims 1 to 7, **characterized in that** a getter material (18) is applied at least on the cover wafer (1) or on the base wafer (11).

9. Thermal infrared sensor array according to one of Claims 1 to 7, **characterized in that** a getter material (18) is arranged in the pit (8) or in the pits (8) below the membrane (12) or at least in the cavity (20) in the cover wafer (1) or in a cavity (21) in the base wafer (11) .

10. Thermal infrared sensor array according to one of Claims 1 to 7, **characterized in that** a large area of the base wafer (11) is coated with an absorbing layer.

11. Thermal infrared sensor array according to Claim 1, **characterized in that** the infrared-sensitive individual pixels (14) are embodied as thermopile, bolometer or pyroelectric sensor.

12. Thermal infrared sensor array according to Claim 11, **characterized in that** the individual pixel (14) as thermopile with thermocouples consists of two semiconducting materials lying one above the other, but oppositely doped, such as polysilicon, amorphous silicon layers, SiGe or other thermoelectric materials.

13. Thermal infrared sensor array according to one of Claims 1 to 12, **characterized in that** each individual pixel (14) has a radiation collector (16) that is connected to the central part of the respective membrane (12) by a stamp and that is located in the cavity (20) of the cover wafer (1).

14. Thermal infrared sensor array according to Claim 1, **characterized in that** the cover wafer (1), the silicon substrate (3) and the base wafer (11) are connected to one another by anodic bonding, eutectic bonding, welding bonding, glass frit bonding or other wafer bonding methods.

15. Thermal infrared sensor array according to one of Claims 1 to 14, **characterized in that** a cavity (21), which is at least as large as the pit (8) of an individual pixel (14) or extends over the entire region of the individual pixel (14), is introduced in the base wafer (11) towards the individual pixel (14).

## Revendications

1. Matrice de capteurs infrarouges thermiques située dans un boîtier de niveau plaquette et comprenant au moins un pixel (14) sensible aux infrarouges réalisé à l'aide de la micromécanique du silicium, ladite matrice comprenant
un sillon d'isolation thermique (8) ménagé dans un substrat (3) en silicium et entouré d'un bord (13) en silicium servant de dissipateur thermique (9),
et une membrane mince (12) sur le sillon (8), qui est reliée au bord (13) en silicium au moyen de minces poutres (4), et une structure de thermopile,
le sillon (8) s'étendant à travers le substrat en silicium jusqu'à la membrane (12), et
des fentes (7) étant situées entre la membrane (12), les poutres (4) et le bord (13) en silicium, **caractérisée en ce que**
une pluralité de pixels individuels (14) sensibles aux infrarouges sont disposés sous la forme d'une ligne ou d'une matrice et sont conçus dans un empilement CMOS (10) sur une couche diélectrique (10'), en formant la membrane (12) avec de minces parois perpendiculaires ou à peu près perpendiculaires au pixel individuel adjacent (14),
lesquelles sont disposées entre au moins une plaquette supérieure, qui est en forme de chapeau (1), qui comporte une cavité (20) et qui recouvre la pluralité de pixels individuels (14) sensibles aux infrarouges, et une plaquette inférieure (11),
la plaquette supérieure (1), le substrat de silicium (3) et la plaquette inférieure (11) étant reliés entre eux de manière étanche au vide, y compris un vide de gaz.

2. Matrice de capteurs infrarouges thermiques selon la revendication 1, **caractérisée en ce que** la plaquette supérieure (1) est en un matériau perméable aux infrarouges tel que du silicium germanium, du sulfure de zinc, du chalcogénure, du fluorure de baryum ou un polymère.

3. Matrice de capteurs infrarouges thermiques selon la revendication 1, **caractérisée en ce que** la plaquette inférieure (11) est en silicium ou un autre matériau thermiquement adapté, tel que du verre, ou un matériau métallique.

4. Matrice de capteurs infrarouges thermiques selon la revendication 3, **caractérisé en ce qu'**une couche réfléchissante (17) à pleine surface ou structurée en un matériau tel que du nitrure d'aluminium, de l'or, de l'argent ou du titane est prévue sur la plaque inférieure (11).

5. Matrice de capteurs infrarouges thermiques selon la revendication 1, **caractérisé en ce qu'**une couche absorbante 6, qui absorbe le rayonnement infrarouge dans une gamme de longueur d'onde spécifiée, est prévue sur la partie centrale de la membrane (12) et sur les poutres (4).

6. Matrice de capteurs infrarouges thermiques selon les revendications 1 et 2, **caractérisée en ce que** la plaquette supérieure (1) est munie, du côté extérieur dirigé vers un objet de mesure et du côté inférieur comportant la cavité (20), d'une couche anti-réflexion perméable aux infrarouges ou d'une couche filtrante.

7. Matrice de capteurs infrarouges thermiques selon la revendication 6, **caractérisée en ce que** la couche anti-réflexion perméable aux infrarouges est pourvue d'un revêtement passe-long ou passe-bande.

8. Matrice de capteurs infrarouges thermiques selon l'une des revendications 1 à 7, **caractérisée en ce qu'**un moyen getter (18) est appliqué au moins sur la plaquette supérieure (1) ou sur la plaquette inférieure (11) .

9. Matrice de capteurs infrarouges thermiques selon l'une des revendications 1 à 7, **caractérisée en ce qu'**un moyen getter (18) est disposé dans le sillon (8) ou dans les sillons (8) au-dessous de la membrane (12) ou au moins dans la cavité (20) ménagée dans la plaquette supérieure (1) ou dans une cavité (21) ménagée dans la plaquette inférieure (11).

10. Matrice de capteurs infrarouges thermiques selon l'une des revendications 1 à 7, **caractérisée en ce que** la plaquette inférieure (11) est revêtue d'une couche absorbante sur une grande surface.

11. Matrice de capteurs infrarouges thermiques selon la revendication 1, **caractérisée en ce que** les pixels individuels (14) sensibles aux infrarouges sont réalisés sous la forme d'une thermopile, d'un bolomètre ou d'un capteur pyroélectrique.

12. Matrice de capteurs infrarouges thermiques selon la revendication 11, **caractérisée en ce que** le pixel individuel (14) comprend, en tant que thermopile pourvue de thermocouples, deux matériaux semiconducteurs superposés mais dopés de manière opposée tels que du polysilicium, des couches de silicium amorphe, du SiGe, ou d'autres matériaux thermoélectriques.

13. Matrice de capteurs infrarouges thermiques selon l'une des revendications 1 à 12, **caractérisée en ce que** chaque pixel individuel (14) comporte un collecteur de rayonnement (16) qui est relié par le biais d'un piston à la partie centrale de la membrane respective (12) et qui est situé dans la cavité (20) de la plaquette supérieure (1).

14. Matrice de capteurs infrarouges thermiques selon la revendication 1, **caractérisée en ce que** la plaquette supérieure (1), le substrat de silicium (3) et la plaquette inférieure (11) sont reliés entre eux par liaison anodique, liaison eutectique, liaison par soudure, liaison par fritte de verre, ou d'autres procédés de liaison de plaquettes.

15. Matrice de capteurs infrarouges thermiques selon l'une des revendications 1 à 14, **caractérisée en ce qu'**une cavité (21) est ménagée dans la plaque inférieure (11) en direction du pixel individuel (14), laquelle cavité est au moins aussi grande que le sillon (8) d'un pixel individuel (14), ou s'étend sur toute la zone des pixels individuels (14).
